(19) Europäisches Patentamt
European Patent Office
Office européen des brevets

(11) EP 2 169 997 A1

(12) EUROPEAN PATENT APPLICATION

(43) Date of publication:
31.03.2010 Bulletin 2010/13

(51) Int Cl.:
*H04W 36/14* (2009.01)

(21) Application number: 08253178.1

(22) Date of filing: 30.09.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: BRITISH TELECOMMUNICATIONS
public limited company
London
EC1A 7AJ (GB)

(72) Inventor: The designation of the inventor has not
yet been filed

(74) Representative: Lau, Chi-Fai et al
BT Group Legal
Intellectual Property Department
PP C5A, BT Centre
81 Newgate Street
London
EC1A 7AJ (GB)

(54) **Controlling handovers in radio communication networks based on predictions of received signal strenght indicators (RSSI)**

(57)　A method and mobile communications terminal for controlling handovers in WMANs, WLANs and between WMANs and WLANs, wherein the mobile communications terrminal being in communication with a first access point of a plurality of access points.

The method comprises the steps of forecasting a radio signal parameter, RSSI, for a predetermined time period for each of the plurality of access points, comparing the forecast radio signal parameter, for each of the plurality of access points with a threshold value associated with each of the plurality of access points, and making a decision as to whether to connect from the first access point to a second access point of the plurality of access points.

Figure 7

**Description**

The present invention relates to a method of controlling handovers in mobile communication networks, and in particular to a method of controlling handovers between wireless local area networks (WLANs) and wireless metropolitan area networks (WMANs).

The growth of mobile telephony and the growth of the internet have largely run in parallel and, not surprisingly, it appears that multimedia traffic is likely to dominate on many future wireless networks. To guarantee QoS (Quality of Service) for bandwidth-intensive multimedia applications, when used over a wireless link, is far from easy. One of the most critical aspect of guaranteeing QoS for multimedia streams, under changing radio resource conditions, is providing seamless handover from one network to another, in such a way that the user is provided with continuous uninterrupted service. A handover process is either mobile station triggered or network triggered, and involves four successive stages:

1. measurement;
2. handover trigger to another access point (AP);
3. channel assignment; and
4. network connection reconfiguration.

As a result, handover is related to access, radio and network resources, and has a direct impact on system capacity and performance. Presently most of the handover techniques (Iraqi and Boutaba (2000), Periyalwal et al. (2003)), attempt to anticipate handovers by using measurements of signal strengths and prior knowledge of mobility patterns.

One of the fundamental problems behind current handover techniques is the fact that wireless devices only trigger a handover upon loss of connectivity or poor and unsustainable performance. Furthermore, many of today's handover mechanisms involve a lengthy measurement stage. For example in IEEE802.11a/b/g technologies, the mobile device scans all channels of 802.11a/b/g to collect information of all the APs operating in its neighbourhood. Based on such a premise (Mishra et al. (2003) and Velayos and Karlsson (2003)), the entire handover takes up to 2 seconds, and the scanning stage would amounts to about 80% of the entire handover duration.

Basically, the state of the art in trigger mechanism (see Mhatre and Papagiannaki (2006)) is based on:

1. reaction to a manufacturer specific number of unacknowledged frames (Lucent Technologies (1998));
2. reaction to loss of a certain number of consecutive Beacon frames (for example Intel PRO/Wireless 2200bg driver); or
3. reaction to Beacon frame loss or quality degradation beyond a specific threshold values. In this case, the mobile device collects information on other neighbouring APs when the signal quality falls below a certain threshold, and handover to a new AP is made only when the difference in quality exceeds a predefined threshold.

Basically there are two types of handover, horizontal handover and vertical handover. For horizontal handover, the network radio system is of the same type, for example cellular communication system, while in a vertical handover, there are a number of different types of networks, for example overlapping WLAN (wireless local area network, eg. WiFi) and WMAN (wireless metropolitan area network, eg. WiMAX) environments. In many conventional soft handover algorithms in cellular networks, the received signal strength index (RSSI) is the major metric used. The paper by Pollini (2006) provides a good review of the conventional soft handover algorithms based on RSSI.

The main arguments of Pollini (2006) are as below:

• The AP with the strongest RSSI is selected. Based on this algorithm, handover will occur even when the signal strength of the serving AP is still adequate. Hence it introduces unnecessary handovers.
• Handover occurs when RSSI of the serving AP is below a threshold and lower than the RSSI of the target AP. By introducing a threshold, this algorithm reduces the number of unnecessary handovers.
• Handover occurs when RSSI of the target AP is greater than the sum of the RSSI of the serving AP and a fixed hysteresis margin. By introducing the hysteresis margin, the approach alleviates the ping-pong effects due to the fluctuation of the signal strength, which is common for wireless links.
• Handover occurs when RSSI of the target AP is greater than the combined sum of the RSSI of the serving AP and a hysteresis margin, and the RSSI of the serving BS is below a threshold. This approach combines the advantages of alleviating ping-pong effect and reducing unnecessary handovers.
• Handover occurs only if the handover condition holds for a certain time, which is called dwell time.

Besides the conventional handover algorithms, recently new techniques have been proposed into into handover algorithm design, such as dynamic programming, neural network, and fuzzy logic (Akar and Mitra (2001), Tseng et al.

(2005), Wong and Cox (2000), Yang and Wang(2002)). Although the methods are novel, the computation involved is intensive and whether the proposed new algorithms are able to reduce average handover delays whilst improving overall user performance remains to be seen.

On the other hand, vertical handover differs from horizontal handover in many aspects, such as the size of the overlap coverage area of different access technologies, absence of comparable signal strengths to initiate a handover, and also the criteria for "best" network, etc (see Lott et al. (2004) and McNair and Zhu (2004). More importantly much work on vertical handover has been focused on mobility management and IP layer and above (McNair and Zhu (2004)) and there are few considering link layer and below. In the paper by Stemm and Katz (1998), the authors consider the link layer for a vertical handover mechanism where the handover is divided into upward vertical handoff and downward vertical handoff, and specify the differences between the considerations for these two categories. The authors also propose the presence or absence of packets to trigger vertical handover, and the primary objective of handover is to minimize handover latency while keeping bandwidth and power overhead low. Furthermore Zhang et al. (2003) carry on the basic concepts of upward and downward vertical handover, where for downward handover, the authors propose physical layer sensing and MAC layer sensing for trigger purpose; while for upward handover, the authors suggest RSSI and adaptive threshold to trigger the handover. However no details on a handover decision algorithm were provided.

The design of a link layer handover for heterogeneous wireless networks via smart triggering is considered here, i.e. handover from network of type A to network of type B. We propose a wireless system where mobile clients can communicate with multiple networks through access points (APs). As the position of the mobile client, system traffic load and channel conditions change over time, the subscriber station has to constantly monitor the available networks and the corresponding link pipe properties, such as the quality of channels (to maintain acceptable data rate, signal quality, BER, PER, etc), and must decide pro-actively, from the link layer perspective, when it is the best time to switch to another network or channel. Smart triggers are link-level triggers, e.g. as defined in IEEE 802.21, to provide state and predictive information about the link. In the present application, only the uplink vertical handover will be considered, initiated by the subscriber stations or mobile clients using smart triggers to select the best available APs for seamless connectivity. To do so predictive triggers via forecasting techniques on current RSSI values and also MAC (medium access control) collision probabilities are investigated so that not only does it enable mobile clients to initiate handover procedure with less error margin but the technique also reduces computational complexities as compared with other techniques.

According to a first aspect of the present invention there is provided a method of operating a mobile communications terminal, the mobile communications terminal being in communication with a first access point of a plurality of access points, the method comprising the steps of': a) forecasting a radio signal parameter for the a predetermined time period for each of the plurality of access points; b) comparing the forecast radio signal parameter for each of the plurality of access points with a threshold value associated with each of the plurality of access points; and c) making a decision as to whether to connect from the first access point to a second access point of the plurality of access points.

In step (a) the method may comprise the steps of forecasting RSSI values, and preferably comprises the steps of forecasting smoothed RSSI values. In step (b) the method may comprise a determination of whether the forecast radio signal parameter for an access point in communication with the mobile terminal exceeds a threshold value associated with that access point. Furthermore, the in step (b) the method may comprise a determination of whether the forecast radio signal parameter for other access points exceeds a threshold value associated with the access point.

According to a second aspect of the present invention there is provided a mobile communications terminal adapted to execute a method as described above.

According to a third aspect of the present invention there is provided a computer programme product comprising computer executable code for performing a method as described above.

Embodiments of the present invention will now be described, by way of example only, with reference to the accompanying drawings in which:

Figure 1 shows a graphical depiction of the variation of RSSI values for a mobile terminal roaming in a WiFi network;
Figure 2 shows a graphical depiction of the variation of smoothed RSSI values for a mobile terminal roaming in a WiFi network;
Figure 3 shows a graphical depiction of the variation of forecast RSSI values and present RSSI values;
Figures 4 and 5 show graphical depictions of the a comparison between smoothed and forecast RSSI values;
Figure 6 shows a graphical depiction of the normal probability plot of the difference between forecast and smoothed RSSI values;
Figure 7 shows a schematic depiction of a plurality of mobile terminals in communication with WLANs and WMANs;
Figure 8 shows a schematic depiction of a flowchart that describes a handover process that uses only RSSI as a metric for determing whether a handover should be made; and
Figure 9 shows a schematic depiction of a flowchart that describes a handover processusing both WLAN MAC collision and RSSI prediction technique when a mobile client moves from a WMAN to a WLAN network.

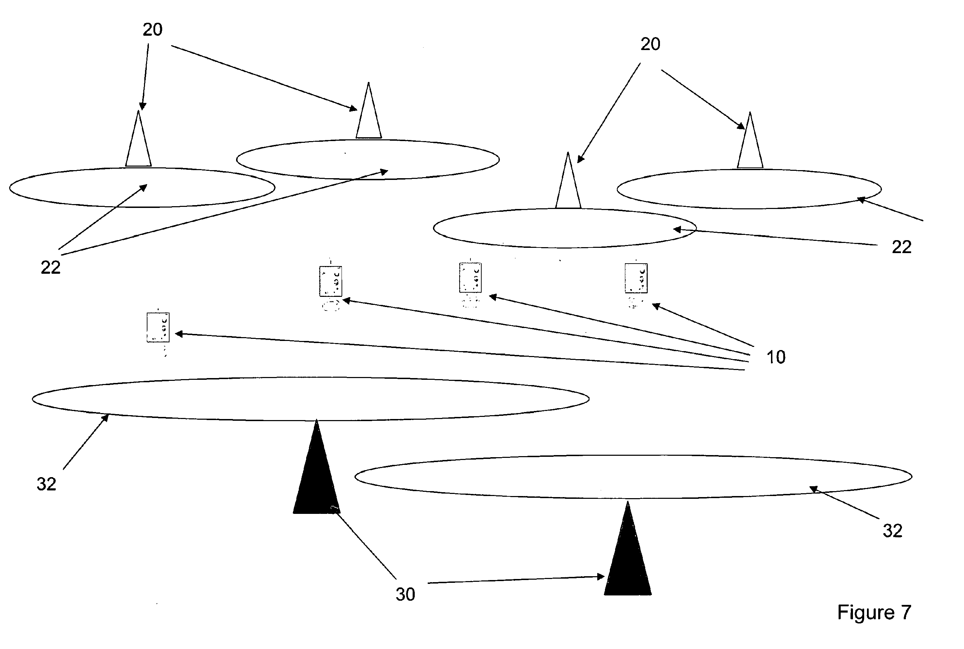

Figure 7 shows a schematic depiction of a plurality of mobile terminals 10. The mobile terminals 10 are able to communicate with WLAN access points 20 and WMAN access points 30. The coverage 22 of each WLAN access point 20 is shown, along with the coverage 32 of each of the WMAN access points 30. It will be seen that there are overlaps of the coverage provided by the WLAN access points and of the coverage provided by the WMAN access points. Also, a mobile terminal may be able to access one or more WLAN access points 20 and one or more WMAN access points 30 from its position at a given point in time. It will be understood that the WMAN & WLAN access points are connected in turn to other core networks such that the mobile terminals are able to access other terminals, whether mobile or fixed, or network based services and/or applications. Although it is conventional to refer to access points with respect to WLANs, such as WiFi (IEE802.11 technologies) and base stations with respect to WMANs such as WiMAX (IEE 802.16 technologies) for the sake of clarity in the following discussion reference will only be made to access points although these references will also include base stations in WMANs.

In WLANs, such as WiFi, it is assumed that the transmission power from both an AP and mobile terminals is fixed. The RSSI measurements could be taken from both beacons and traffic packets. Whereas in WMANS, for example WiMAX, due to power control, the transmission power could be dynamically adjusted by the base station and mobile terminals have no knowledge of the current transmission power. Hence at downlink, the RSSI measurements should be taken from common packets only, which could be preamble, DL-MAP, and other broadcast messages. For uplink, it remains open on the choice of wireless card manufacturers which packets to measure RSSI.

Since WLAN has a smaller network coverage, to capture when the physical link is available for a particular user it is proposed to use a combination of MAC delay and RSSI as trigger metrics. The MAC delay is defined to be the interval between the time when a packet becomes the head of the MAC layer queue and the time when the packet is successfully transmitted. Ideally, if the packet loss probability due to the physical link is zero, the MAC delay captures how long the transmitter has to wait to be able to use the physical link and transmit its packets. However in reality, the packet loss probability due to physical link cannot be zero. Hence it is necessary to combine RSSI and the MAC delay to capture when the physical link is available for a particular user, where RSSI could give an estimate on the packet loss probability due to the physical link. As for the case of handover from WLAN to WMAN or between WMAN networks, due to the fact WMAN networks such as WiMAX provide QoS (such as power control, scheduling of packets of data) to mobile clients it is sufficient to use the RSSI as a metric for triggering purposes.

Using existing IEEE802.11 MAC analysis (see Bianchi (2000)) a saturated network can be considered where mobile clients are contending for a WLAN channel and analyse the DCF (Distributed Coordination Function) performance. Basically the DCF methodology adopts an exponential backoff scheme. At each packet transmission, the backoff time is uniformly chosen in the range (0, $W$-1) where w is the contention window and depends on the number of transmissions failed for the packet.

Two major results obtained in this work are the relationship among the number of saturated mobile stations n, the probability that a mobile station transmits in a randomly chosen slot $\tau$, and conditional collision probability $P_c$ where a transmitted packet encounters a collision, as follows:

$$(1) \qquad \tau = \frac{2(1 - 2P_c)}{(1 - 2P_c)(W + 1) + P_c W (1 - (2P_c)^m)} \, ,$$

$$(2) \qquad P_c = 1 - (1 - \tau)^{n-1} \, ,$$

where $m$ is the value such that $CW_{max} = 2^m CW_{min}$, $W = CW_{min}$, and $CW_{min}$ is the minimum contention window.

Upon each successful transmission, the average amount of time spent on the channel is as follows:

$$(3) \qquad \overline{T} = T_s + \sigma_s \frac{1 - P_{tr}}{P_s P_{tr}} + T_c \left( \frac{1}{P_s} - 1 \right)$$

where

$\overline{T}$ = average time spent,
$\overline{T}_s$ = average times the channel is sensed busy because of a successful transmission

$\overline{T}_c$ = average times the channel is sensed busy during a collision

$\sigma_s$ = length of an idle slot,

$P_{tr}$ = probability that there are at least one transmission in the considered slot time

$P_s$ = probability that a transmission occurring on the channel is successful.

$P_{tr}$ and $P_s$ can be represented in terms of n, $\tau$, as follows:

$$(4) \qquad P_{tr} = 1 - \left(1 - \tau\right)^n$$

$$(5) \qquad P_s = \frac{n\tau(1-\tau)^{n-1}}{P_{tr}} = \frac{n\tau(1-\tau)^{n-1}}{1-(1-\tau)^n} \; .$$

Next, it is necessary to obtain the collision probability $P_c$ through measurements at the mobile client or subscriber station side. At the client side, the client can observe and measure the channel status in terms of idle, successful transmissions and collisions. Let

$n_i$ = number of idle slots per successful transmission

$n_c$ = number of collision slots per successful transmission.

From the definitions of $P_{tr}$ and $P_s$, we have

1 - $P_{tr}$ = probability that a random slot is an idle slot

$P_s P_{tr}$ = probability a slot with successful transmission

(1 - $P_s$)$P_{tr}$ = probability a slot with collision

Hence, the expectations of $n_i$ and $n_c$ can be represented as follows:

$$(6) \qquad E[n_i] = \frac{1 - P_{tr}}{P_s P_{tr}} \; ,$$

$$(7) \qquad E[n_c] = \frac{(1 - P_s)P_{tr}}{P_s P_{tr}} = \frac{1}{P_s} - 1 \; .$$

After some manipulations on the above two equations, $P_{tr}$ and $P_s$ can be represented by $E[n_i]$ and $E[n_c]$ as follows:

$$(8) \qquad P_s = \frac{1}{E[n_c] + 1} \; ,$$

$$(9) \qquad P_{tr} = \frac{1}{\dfrac{E[n_i]}{E[n_c]+1}+1} \; .$$

Furthermore, the probability that a random slot is a slot with successful transmission $P_s P_{tr}$ is also the probability that out of n stations, there are exactly one station that is transmitting. Hence,

$$(10) \qquad P_s P_{tr} = n\tau(1-\tau)^{n-1} \; .$$

By combining (10) and (4), we obtain the following equation:

$$(11) \qquad n = \left(\frac{1}{(1-P_{tr})^{1/n}}-1\right)^{-1}\left(\frac{P_s P_{tr}}{1-P_{tr}}\right)$$

from which we can find the expected number of saturated stations n contending for a channel. The transmission probability $\tau$ can then be obtained from (4) as follows:

$$(12) \qquad \tau = 1 - (1-P_{tr})^{1/n}$$

and the conditional collision probability $P_c$ can be obtained from (2).
In summary, by measuring the average number of idle slots and collision slots per successful transmission and applying (8), (9), (11), (12) and (2), we can obtain key parameters on WLAN DCF operations such as the number of saturated stations, transmission probability and conditional collision probability. Hence if

$$(13) \qquad P_c = 1 - (1-\tau)^{n-1} \geq \gamma$$

where $\gamma \in (0, 1)$ is a threshold value then the mobile client will trigger a handover from WMAN to WLAN network. Otherwise the mobile client will test the strength of the WLAN RSSI values whether should it trigger a handover to a WLAN AP or not.
In general for a mobile client assessing $M$ number of neighbouring WLAN APs (sharing either the same channel or overlapping channels) we then denote the $i$-th conditional collision probability $P_c{}^{(i)}$, $i$ = 1,2,K, $M$ as

$$(15) \qquad P_c^{(i)} = 1 - (1-\tau^{(i)})^{n^{(i)}-1}$$

where $\tau^{(i)}$ is the probability that a mobile client transmits in a randomly chosen slot for the $i$-th AP and $n^{(i)}$ is the number of mobile clients or stations contending for the $i$-th AP. By denoting

(16)
$$P_c^{(k)} = \max\left\{P_c^{(i)}, \, i = 1, \, 2, \mathrm{K}, \, M\right\}$$

hence the client would only issue a trigger to the k -th AP when

(17)
$$P_c^{(k)} \geq \gamma$$

Otherwise the mobile client will switch to use RSSI as the next metric to contend for other AP channels.

In order to make reliable forecast of RSSI values of neighbouring APs, it is necessary to build diffusion process models for a selected window size of a series of RSSI values for each of the co-channel and partially overlapping channel APs within the client vicinity. Instead of using statistical time series modelling which involves comprehensive model identification process and then estimation parameters that are numerically intensive (see Akaike (1974), Jones (1980) and Schwarz (1978)), we propose a much more simpler and effective way to estimate diffusion process model parameters from historical data.

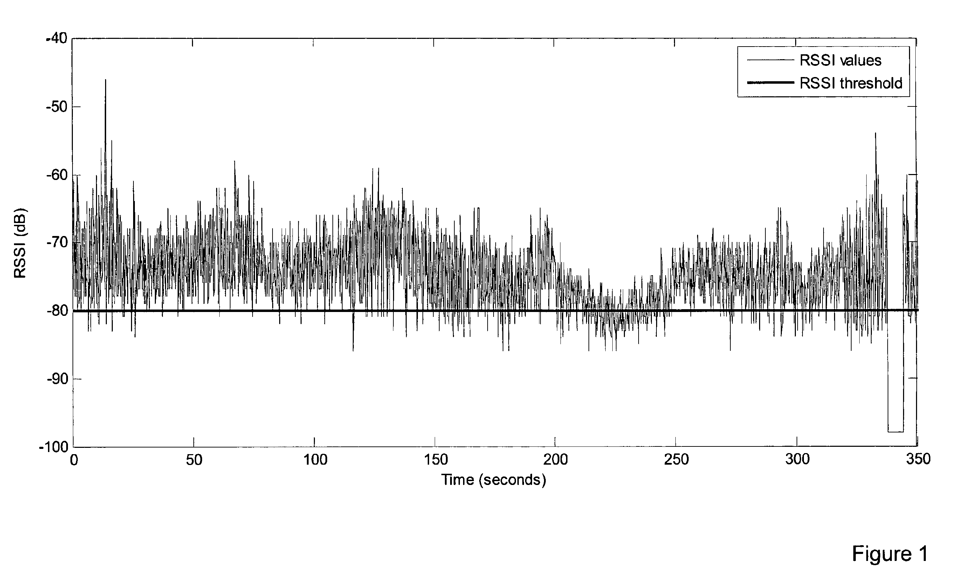

Conceptually, a time series is a sequence of observations taken sequentially in time, and an intrinsic feature of time series is that, typically, adjacent observations of a given data are dependent. Hence time series analysis is concerned with building statistical models to analyze such dependent properties, and to use them in other areas of application. Chiefly amongst those is forecasting future values of a series of data from current and past values. Using time step of 0.1 s, the following Figure 1 (see Mhatre and Papagiannaki (2006)) shows the time series of RSSI values (measured in decibels) of a mobile device roaming a WiFi network. The RSSI threshold value is set at -80 dB (to maintain good channel quality, RSSI values must be above this threshold value) and if the mobile device fails to receive any signal strength from the AP, the RSSI value is set to -98 dB.

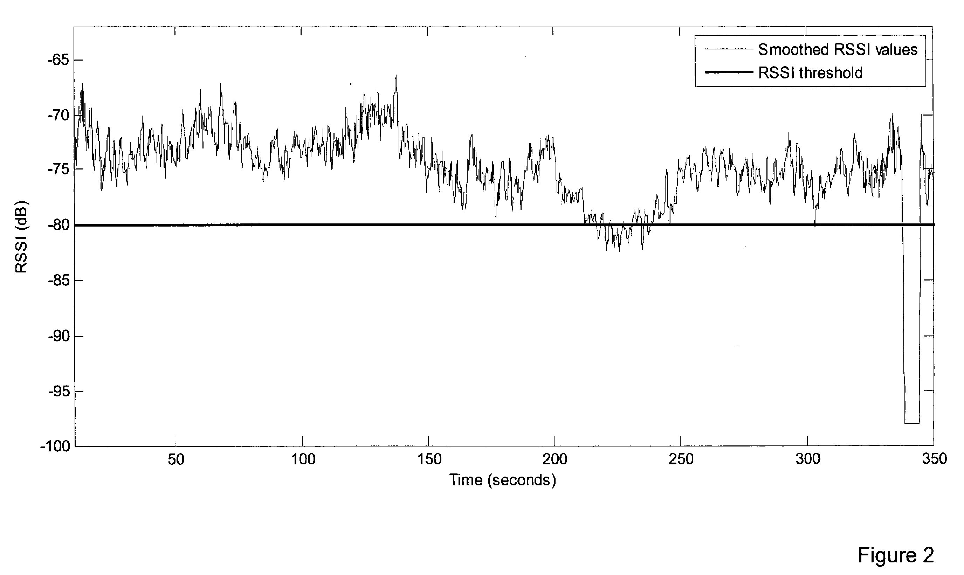

In Figure 2, using a window size of $n = 10$, we plot a moving average or smoothed RSSI values $\{X_t\}$ using the following formula

(18)
$$X_t = \frac{1}{n} \sum_{i=t-n+1}^{t} \widetilde{X}_i, \; t = n, \, n+1, \mathrm{K}$$

where $\{\widetilde{X}_t\}$ is a set of raw RSSI values measured for each time interval of 0.1 s.

In this invention report we utilise the smoothed RSSI values rather than raw RSSI values as a metric for smart triggering. This is to ensure that unnecessary trigger mechanism can be reduced whilst reducing computational expenses.

Since RSSI values do exhibit mean-reverting behaviour (converging towards a long term mean), it is natural for us to look at models with this property. To the best of our knowledge there is no literature in the public domain which has explored using stochastic calculus to model RSSI values for smart triggering mechanism. In this invention we propose modelling the RSSI values using a simple yet efficient mean-reverting diffusion process called the Ornstein-Uhlenbeck $OU(\lambda, \mu, \sigma)$ process, defined by the stochastic differential equation (SDE)

(19)
$$dX_t = \lambda\left(\mu - X_t\right)dt + \sigma \, dW_t$$

where $dW_t \sim N(0, dt)$ is a Wiener process with mean zero and standard deviation $\sqrt{dt}$, $\lambda$ is the mean reversion rate, $\mu$ is the mean and $\sigma$ is the volatility. For this process $\frac{1}{\lambda}$ gives the time scale over which the process reverts to its mean value $\mu$.

Taking note that

$$d\left(e^{\lambda t}\, X_t\right) = \lambda\, e^{\lambda t} X_t\, dt + e^{\lambda t}\, dX_t + \frac{1}{2}\lambda^2\, e^{\lambda t}\, X_t\, (dt)^2 + \mathrm{K}$$

and from Ito's lemma (see Ito (1951)) such that

$$\left(dX_t\right)^2 = dt,\ \left(dt\right)^\nu = o(1),\ \nu > 1$$

for any arbitrary time step $\Delta t > 0$, the Ornstein-Uhlenbeck process has a unique solution

$$(20) \qquad X_{t+\Delta t} = X_t\, e^{-\lambda\Delta t} + \mu\left(1 - e^{-\lambda\Delta t}\right) + \sigma\sqrt{\frac{1 - e^{-2\lambda\Delta t}}{2\lambda}}\, Z$$

where $Z \sim N(0,1)$ follows a standard normal distribution.

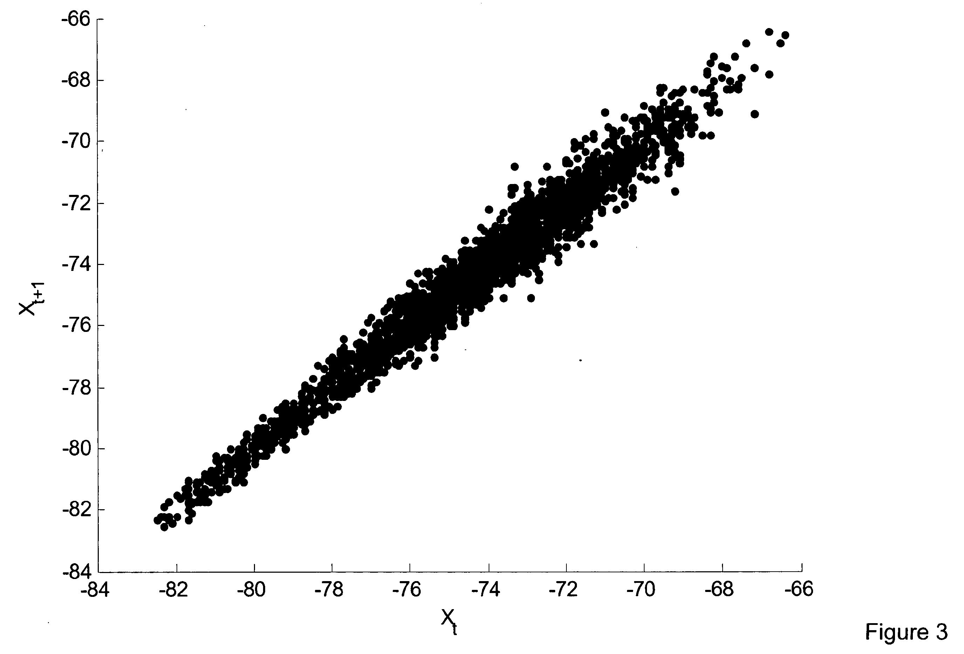

In the present invention, rather than accurately finding the parameter values using expensive maximum likelihood estimation method we can instead rely on simple regression analysis. In Figure 3, we plot the relationship between $X_{t+1}$ versus $X_t$ (we take $\Delta t = 1s$) and we can see from the scatter plot that there is a strong linear relationship between the two values for all $t$ values. Hence the first step in our parameter estimation using regression analysis is to find the best fit of the RSSI time series $\{X_t\}$ to its past values in order to make future forecasts.

To begin with by taking $N > 2$ to be the size of the window for the series of data and $\Delta t$ be the step size, we let the relationship between consecutive RSSI values $X_t, X_{t+\Delta t}, X_{t+2\Delta t}, K, X_T$

$$(21) \qquad X_{t+\Delta t} = a\, X_t + b + \varepsilon_t,\ \varepsilon_t \sim N\left(0,\sigma_\varepsilon^2\right)$$

where $T = t + N\Delta t$, $a$ and $b$ are the regression parameters, $\varepsilon_t$ is normally distributed and is independent and identically distributed. Comparing equations (20) and (21), the relationship between the linear fit and the OU process model parameters is therefore given by

$$a = e^{-\lambda\Delta t}\ ,\ b = \mu\left(1 - e^{-\lambda\Delta t}\right),\ \sigma_\varepsilon = \sigma\sqrt{\frac{1 - e^{-2\lambda\Delta t}}{2\lambda}}\ .$$

Using least-squares regression analysis we can calculate the following quantities

$$S_x = \sum_{i=t+\Delta t}^{T} X_{i-\Delta t}\ ,\ S_y = \sum_{i=t+\Delta t}^{T} X_i\ ,\ S_{xx} = \sum_{i=t+\Delta t}^{T} X_{i-\Delta t}^2\ ,\ S_{xy} = \sum_{i=t+\Delta t}^{T} X_{i-\Delta t} X_i\ ,$$

$$S_{yy} = \sum_{i=t+\Delta t}^{T} X_i^2$$

and the linear fit parameters are therefore estimated as follows :

$$\hat{a} = \frac{N S_{xy} - S_x S_y}{N S_{xx} - S_x^2}$$

$$\hat{b} = \frac{S_y - \hat{a} S_x}{N}$$

$$\hat{\sigma}_\varepsilon = \sqrt{\frac{n S_{yy} - S_y^2 - \hat{a}(N S_{xy} - S_x S_y)}{N(N-2)}} \, .$$

Hence provided $\hat{a} > 0$ we can then estimate the OU process model with the formulas

$$\hat{\mu} = \frac{\hat{b}}{1 - \hat{a}}$$

$$\hat{\lambda} = -\frac{\log \hat{a}}{\Delta t}$$

$$\hat{\sigma} = \hat{\sigma}_\varepsilon \sqrt{\frac{-2 \log \hat{a}}{(1 - \hat{a}^2)\Delta t}}$$

and we can write

$$(22) \qquad \hat{X}_{t+\Delta t} = X_t \, e^{-\hat{\lambda}\Delta t} + \hat{\mu}\left(1 - e^{-\hat{\lambda}\Delta t}\right) + \hat{\sigma}\sqrt{\frac{1 - e^{-2\hat{\lambda}\Delta t}}{2\hat{\lambda}}} \, Z \, .$$

Otherwise we set

$$(23) \qquad \hat{X}_{t+\Delta t} = X_t \, .$$

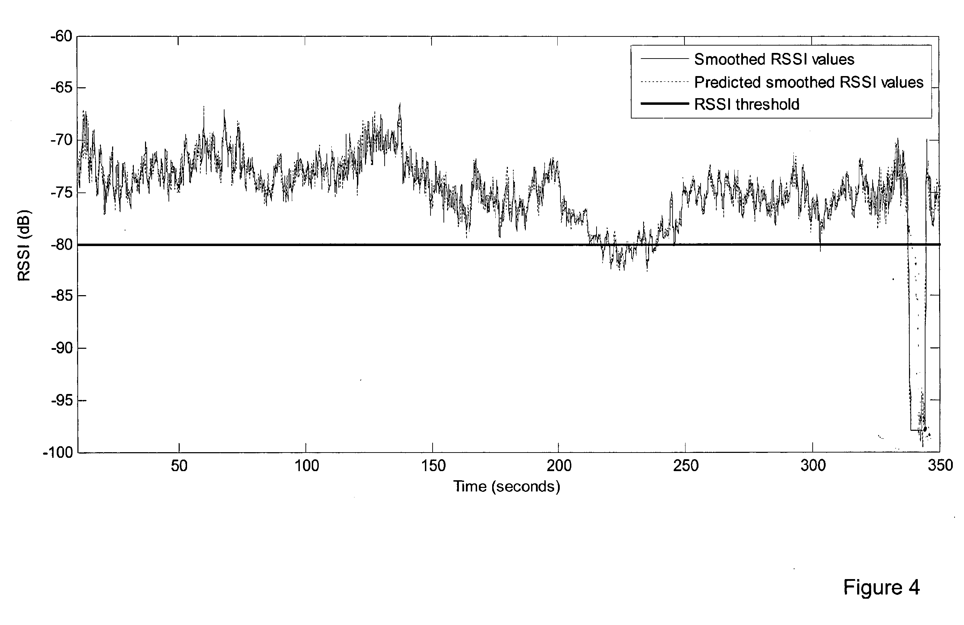

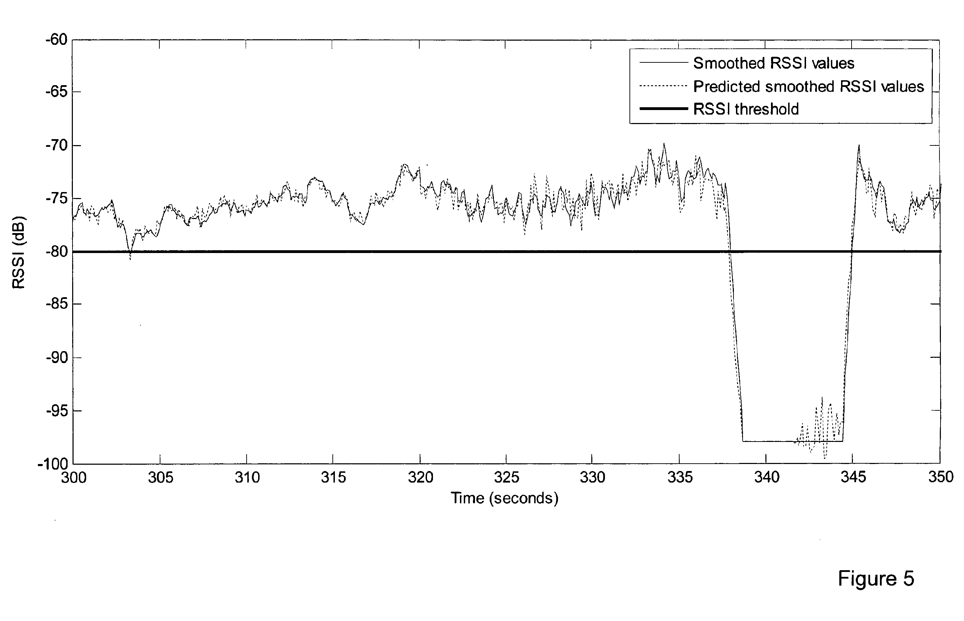

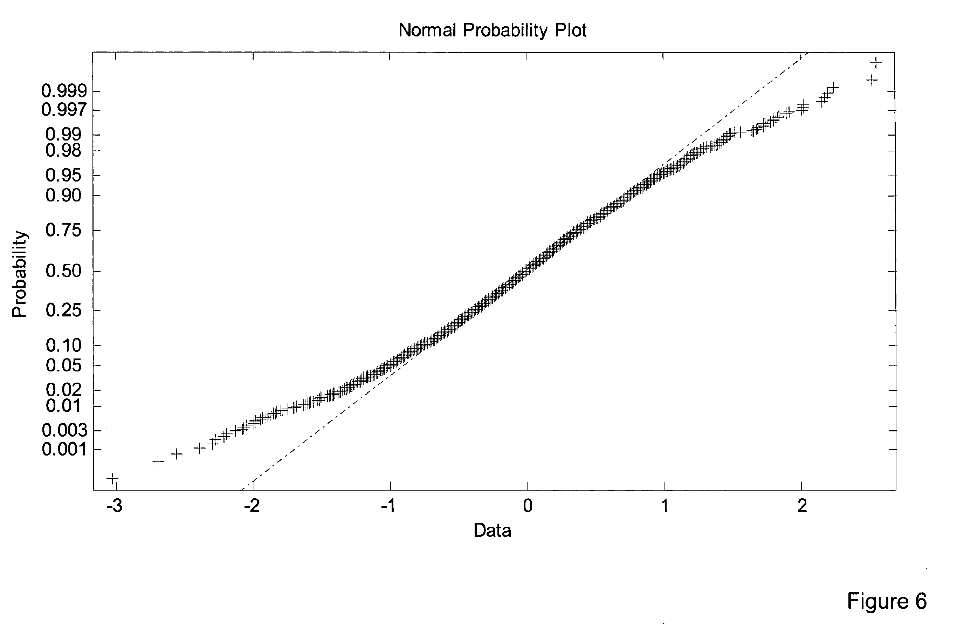

Using $N = 30$, and finding appropriate parameter values $\hat{\mu}$, $\hat{\lambda}$ and $\hat{\sigma}$ for each window size, Figures 4 and 5 show a close relationship between the smoothed RSSI values and the predicted smoothed RSSI values. Hence the OU process which is less expensive to compute can be utilised to estimate future RSSI values. By setting the residuals $\hat{\varepsilon}_t$ = $X_t$ - $\hat{X}_t$, where $\hat{X}_t$ is an approximate value of $X_t$ from the OU process model, Figure 6 shows the normal probability plot of residuals. From the plot, there is a high proportion of residuals being on the straight line which shows the residuals is well behaved and can be approximately normal distributed.

At the forecasting stage, once the parameter values $\hat{\mu}$, $\hat{\lambda}$ and $\hat{\sigma}$ are estimated, for each lead time $\lambda \geq \Delta t$, we

can easily calculate the forecast values $\hat{X}_{T+\lambda}$ as

$$(24) \qquad \hat{X}_{T+\lambda} = X_T\, e^{-\hat{\lambda}\lambda} + \hat{\mu}\left(1 - e^{-\hat{\lambda}\lambda}\right) + \hat{\sigma}\sqrt{\frac{1 - e^{-2\hat{\lambda}\lambda}}{2\hat{\lambda}}}\, Z$$

with expectation and variance

$$E\left(\hat{X}_{T+\lambda}\right) = X_T\, e^{-\hat{\lambda}\lambda} + \hat{\mu}\left(1 - e^{-\hat{\lambda}\lambda}\right)$$

$$Var\left(\hat{X}_{T+\lambda}\right) = \hat{\sigma}^2\left(\frac{1 - e^{-2\hat{\lambda}\lambda}}{2\hat{\lambda}}\right)$$

such that

$$(25) \qquad \frac{\hat{X}_{T+\lambda} - E\left(\hat{X}_{T+\lambda}\right)}{\sqrt{Var\left(\hat{X}_{T+\lambda}\right)}} \sim N(0, 1).$$

As the mobile client uses knowledge on all the APs operating on the current as well as overlapping channels, here the client would only issue triggers when its present AP forecasted RSSI value falls below its threshold value, and the forecasted RSSI value of a future AP exceeds its threshold value. By denoting the neighbouring AP RSSI values as $Y_t^{(i)}$ where $i = 1,2,\mathrm{K}\,,M$ where M is the total number of all the neighbouring APs sharing either the same channel or overlapping channels, hence the client would only issue a trigger when

$$(26) \qquad \hat{X}_{T+\lambda} \leq \bar{X} \quad \text{and} \quad \hat{Y}_{T+\lambda}^{(j)} > \bar{Y}^{(j)}$$

where the index j is defined as

$$(27) \qquad j = \left\{i : \max\{\hat{Y}_{T+\lambda}^{(i)} - \bar{Y}^{(i)}, 0\}, i = 1,2,\mathrm{K}\,,M\right\}$$

where X is the current AP RSSI threshold representing the mobile client minimal quality of service (QoS) it must support in order to operate successfully, $\bar{Y}^{(i)}$ is the $i$-th neighbouring RSSI threshold value and $\hat{Y}_{T+\lambda}^{(j)}$ is the predicted RSSI value of the $j$-th neighbouring AP. The expression (27) denotes that the smart trigger method would only choose the "best" neighbouring AP for a handover from its current default AP. On the other hand, if there are no better APs operating on the same channel or overlapping channels, then the algorithmic scheme will not trigger a handover event. But in the event, if the current AP experienced a link deterioration, then a trigger is invoked via a scan-based handover (choosing the "best" AP with the highest signal strength).

Based on the forecasted RSSI values of the current AP and in order to minimize the error of decision making, wireless card manufacturers like Intel (see Mhatre and Papagiannaki (2006)) would introduce a protection margin (or hysteresis factor) $\Delta_x \geq 0$. The purpose of having this protection margin is to augment it to the RSSI threshold value, $\overline{X}$ so that the client has an enhanced threshold value, $X + \Delta_x$ to ensure a better QoS. If the forecasted RSSI value is greater than the enhanced threshold value, then the system would not trigger a handover to another AP. Otherwise the client would trigger a handover mechanism from its current AP and if the RSSI of a neighbouring AP is high enough then the client would switch to a new AP to be connected with.

With this protection margin $\Delta_x$, and for a forecasted RSSI value $\hat{X}_{T+\lambda}$ the probability in making a trigger is defined as

$$(28) \qquad P(\hat{X}_{T+\lambda} \leq \overline{X} + \Delta_x) = P\left( Z \leq \frac{\overline{X} + \Delta_x - E\left(\hat{X}_{T+\lambda}\right)}{\sqrt{Var\left(\hat{X}_{T+\lambda}\right)}} \right)$$

and if

$$(29) \qquad P(\hat{X}_{T+\lambda} \leq \overline{X} + \Delta_x) \geq \alpha$$

where $\alpha \in (0, 1)$ is a margin error then the mobile client will issue a trigger to initiate a handover to a next available AP.

In addition, for the forecasted RSSI values of neighbouring APs (via OU process model), and for each of the $i$-th APs we also introduce a protection margin $\Delta_y^{(i)} \geq 0$ so as to minimize the error of false selection of an AP for handover. By analogy with the probability of making a trigger for the mobile client, for each neighbouring APs, we define the probability of making a selection of an AP as

$$(30) \qquad P(\hat{Y}_{T+\lambda}^{(i)} \geq \overline{Y}^{(i)} + \Delta_y^{(i)}) = P\left( Z \geq \frac{\overline{Y}^{(i)} + \Delta_y^{(i)} - E\left(\hat{Y}_{T+\lambda}^{(i)}\right)}{\sqrt{Var\left(\hat{Y}_{T+\lambda}^{(i)}\right)}} \right), \; i = 1, 2, \mathrm{K}, M$$

and if

$$(31) \qquad P(\hat{Y}_{T+\lambda}^{(i)} \geq \overline{Y}^{(i)} + \Delta_y^{(i)}) \geq \beta$$

where $\beta \in (0, 1)$ is a margin error, then the $i$-th AP can be selected to be handover.

Having found the respective optimal protection margins, we can now redefine our criterion of a handover from a current AP to the j -th AP as:

$$(32) \qquad P\left(\hat{X}_{T+\lambda} \leq \overline{X} + \Delta_x\right) \geq \alpha \; \text{ and } \; P\left(\hat{Y}_{T+\lambda}^{(j)} \geq \overline{Y}^{(j)} + \Delta_y^{(j)}\right) \geq \beta$$

where the index $j$ is defined as

$$(33) \qquad\qquad j = \left\{ i : \max \left\{ P\!\left( \hat{Y}^{(i)}_{T+\lambda} \geq \overline{Y}^{(i)} + \Delta^{(i)}_{y} \right) \right\} i = 1, 2, \mathrm{K}, M \right\}.$$

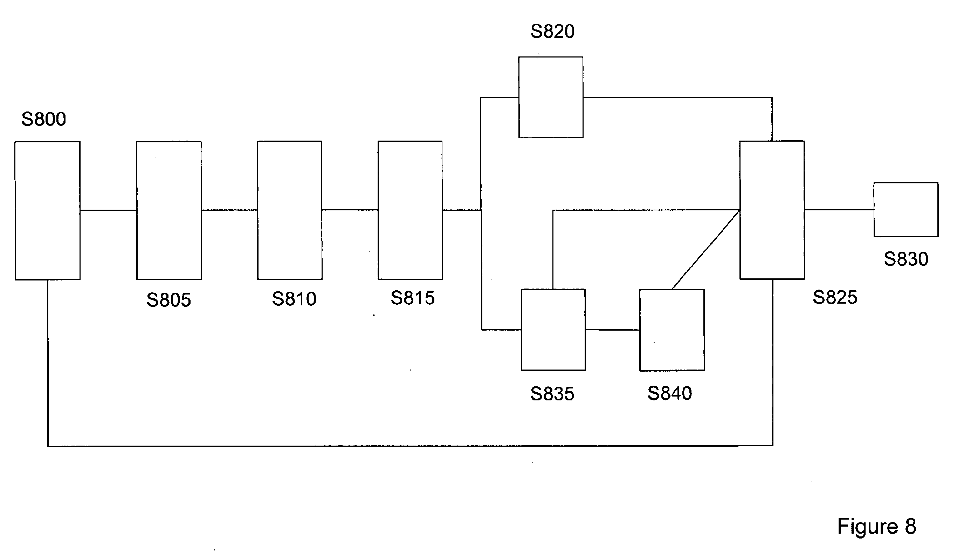

Figure 8 shows a schematic depiction of a flowchart that describes a handover process that uses only RSSI as a metric for determing whether a handover should be made. Such a process is used when a mobile terminal is moving from a WLAN to a WMAN or within WMANs. The process begins at step S800 when the size of the window for smoothing RSSI values is selected. At step S805 the Ormstein-Uhlenbeck SDE parameters are determined for each of the access points that are available. At step S810 these parameters are used to forecast smoothed RSSI values for a specified lead time for each of the available action points. Then, at step S815 the mobile terminal determines whether a handover should be triggered (based on equation 29) and whether one of the other available access points is able to acccept the mobile terminal (based on equation 31).

If a handover should be triggered and one of the other available access points is able to acccept the mobile terminal then at step S820 a handover is triggered. At step S825 the latest RSSI values are updated and the process either terminates at step S830 or returns to S800. If the result of S815 is that a handover should not be triggered because the forecast RSSI value for the acces point in use is greater than the enenhanced threshold then the process proceeds to step S825 for the updating of the latest RSSI values. The process will then either terminate at step S830 or return to S800. If the forecast RSSI value for the access point in use is not greater than the enenhanced threshold but none of the other access points were able to receive the mobile terminal then at step S840 the mobile terminal will trigger a conventional scan-based handover and will select the 'best' available access point. The process will then either terminate at step S830 or return to S800.

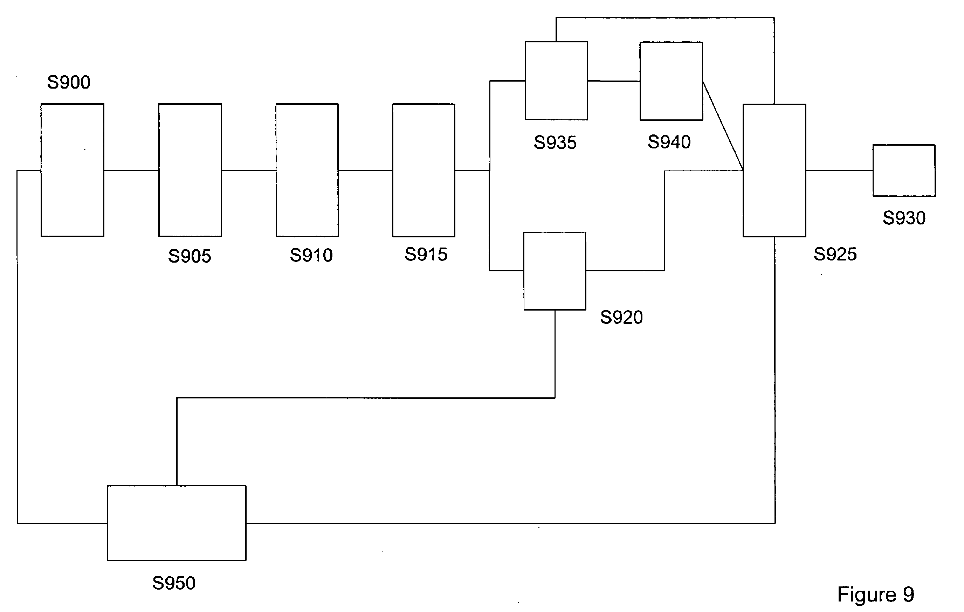

Figure 9 shows a schematic depiction of a flowchart that describes a handover processusing both WLAN MAC collision and RSSI prediction technique when a mobile client moves from a WMAN to a WLAN network (or between WLANs). The process begins at step S950 and the mobile terminal determines the collision probability parameters for each of the available access points. If the condirional collision probability is greater than the threshold value then the mobile terminal will trigger a handover to a WLAN access point at step S920. Otherwise, the process will perform step S900 and select the size of the window for smoothing RSSI values. At step S905 the Ormstein-Uhlenbeck SDE parameters are determined for each of the access points that are available. At step S910 these parameters are used to forecast smoothed RSSI values for a specified lead time for each of the available action points. Then, at step S915 the mobile terminal determines whether a handover should be triggered (based on equation 29) and whether one of the other available access points is able to acccept the mobile terminal (based on equation 31).

If a handover should be triggered and one of the other available access points is able to acccept the mobile terminal then at step S920 a handover is triggered. At step S925 the latest RSSI values are updated and the process either terminates at step S930 or returns to S950. If the result of S915 is that a handover should not be triggered because the forecast RSSI value for the acces point in use is greater than the enenhanced threshold then the process proceeds to step S925 for the updating of the latest RSSI values. The process will then either terminate at step S930 or return to S950. If the forecast RSSI value for the access point in use is not greater than the enenhanced threshold but none of the other access points were able to receive the mobile terminal then at step S940 the mobile terminal will trigger a conventional scan-based handover and will select the 'best' available access point. The process will then either terminate at step S930 or return to S950.

It will be understood that the present invention can be implemented as a program or software component that will be executed by a computer. Software implementing a method according to the present invention may be supplied on physical media (such as a USB drive, CD-ROM, DVD, etc) or supplied or made available for transfer or download via a communications network. A mobile terminal which can perform a method according to the present application may comprise any mobile device which has the appropriate network interfaces: it may comprise a laptop, PDA, smartphone, mobile telephone, handheld games console, etc.

References

H. Akaike, "A new look at the statistical model identification", IEEE Transactions on Automatic Control, Vol 19 (6), pp. 716-723, 1974.

M. Akar and U. Mitra, "Variations on Optimal and Suboptimal Handoff Control for Wireless Communication Systems". IEEE Journal on Selected Areas in Communications, Vol. 19, pp. 1173-1185, Jun 2001.

G. Bianchi, "Performance analysis of the IEEE 802.11 distributed coordination function," IEEE J. Select. Areas Commun., vol. 18, no. 3, pp. 535-547, 2000

Y. Iraqi and R. Boutaba, "Resource management issues in future wireless multimedia networks", Special issue on the Management of Multimedia Networking, 9, No. 3, pp. 231 - 260, 2000.

K. Ito, On stochastic differential equations, American Mathematical Society, 4, pp. 1 - 51, 1951.

R. H. Jones. Maximum likelihood fitting of ARMA models to time series with missing observations, Technometrics 22, 389-395, 1980.

M. Lott, M. Siebert, S. Bonjour, D. von Hugo, M. Weckerle, AG. Siemens, "Interworking of WLAN and 3G systems". IEE Proceedings on Communications, pp. 507- 513, Vol. 151, Oct. 2004.

Lucent Technologies, "Roaming with Orinoco/IEEE 802.11", Technical Report, Dec. 1998.

J. McNair and F. Zhu, "Vertical handoffs in fourth-generation multinetwork environments". IEEE Wireless Communications, pp. 8- 15, Vol. 11, June 2004.

V. Mhatre and K. Papagiannaki, "Using smart triggers for improved user performance in 802.11 wireless networks", MobiSys'06, June 2006.

A. Mishra, M.H. Shin and W. Albaugh, "An empirical analysis of the IEEE 802.11 Mac layer handoff process", ACM SIGCOMM Computer Communication Review, Vol. 3, pp. 93 - 102, Apr 2003.

S. Periyalwal, B. Hashem, G. Senarath, K. Au and R. Matyas, "Future mobile broadband wireless networks: a radio resource management perspective", Wireless Communications and Mobile Computing, 3, pp. 1 - 13, 2003.

G. P. Pollini, "Trends in Handover Design". IEEE Communications Magazine, March 1996.

M. Stemm and R. H. Katz, "Vertical handoffs in wireless overlay networks". Mobile Networks and Applications, pp. 335 - 350, Vol.3, 1998.

G. Schwarz, "Estimating the dimension of a model", Annal of Statistics, Vol 6, pp. 461 - 464, 1978.

C.C. Tseng, K. H Chi, M.D. Hsieh, and H.H Chang," Location-based Fast Handoff for 802.11 Networks". IEEE Communications Letters, pp. 304- 306, Vol.9, April 2005.

H. Velayos and G. Karlsson, "Techniques to reduce IEEE 802.11 b Mac layer handover time", Technical Report TRITA-IMIT-LCN R 03:02, Apr. 2003.

K.D. Wong and D.C. Cox, "A pattern recognition system for handoff algorithms", IEEE Journal on Selected Areas in Communications, Vol. 18, No. 7, July 2000.

Z. Yang and X. Wang,"Joint Mobility Tracking and Handoff in Cellular Networks via Sequential Monte Carlo Filtering". Infocomm 2002, Vol. 2, pp. 968- 975, 2002.

Q. Zhang, C. Guo, Z. Guo and W. Zhu, "Efficient mobility management for vertical handoff between WMAN and WLAN". IEEE Communications Magazine, pp. 102- 108, Vol. 41, Nov. 2003.

## Claims

1. A method of operating a mobile communications terminal, the mobile communications terminal being in communication with a first access point of a plurality of access points, the method comprising the steps of':

   a) forecasting a radio signal parameter for the a predetermined time period for each of the plurality of access points;
   b) comparing the forecast radio signal parameter for each of the plurality of access points with a threshold value associated with each of the plurality of access points; and
   c) making a decision as to whether to connect from the first access point to a second access point of the plurality of access points.

2. A method according to claim 1, wherein in step (a) the method comprises the steps of forecasting RSSI values.

3. A method according to claim 2, wherein in step (a) the method comprises the steps of forecasting smoothed RSSI values.

4. A method according to claim 1, wherein in step (b) the method comprises a determination of whether the forecast radio signal parameter for an access point in communication with the mobile terminal exceeds a threshold value associated with that access point.

5. A method according to claim 4, wherein in step (b) the method comprises a determination of whether the forecast radio signal parameter for other access points exceeds a threshold value associated with the access point.

6. A mobile communications terminal adapted to execute a method according to any of claims 1 to 5.

7. A computer programme product comprising computer executable code for performing a method according to any of claims 1 to 5.

Figure 1

Figure 2

Figure 3

Figure 4

Figure 5

Normal Probability Plot

Figure 6

Figure 7

30

32

32

10

22

22

20

20

EP 2 169 997 A1

Figure 8

Figure 9

Europäisches
Patentamt

European
Patent Office

Office européen
des brevets

**EUROPEAN SEARCH REPORT**

Application Number

EP 08 25 3178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/047370 A1 (KOTZIN MICHAEL D [US] ET AL) 3 March 2005 (2005-03-03)<br>* abstract *<br>* paragraphs [0026], [0027]; figures 1,3 *<br>* paragraph [0032] *<br>----- | 1-7 | INV.<br>H04W36/14 |
| A | HUAIYU LIU ET AL: "A smart triggering scheme to reduce service interruption during heterogeneous handovers"<br>DEPENDABLE SYSTEMS AND NETWORKS WITH FTCS AND DCC, 2008. DSN 2008. IEEE INTERNATIONAL CONFERENCE ON, IEEE, PISCATAWAY, NJ, USA,<br>24 June 2008 (2008-06-24), pages 430-439, XP031324516<br>ISBN: 978-1-4244-2397-2<br>* the whole document *<br>----- | 1-7 | |
| A | CHING-HUNG LEE ET AL: "An intelligent handoff algorithm for wireless communication systems using grey prediction and fuzzy decision system"<br>NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE,<br>vol. 1, 21 March 2004 (2004-03-21), pages 541-546, XP010705817<br>ISBN: 978-0-7803-8193-3<br>* the whole document *<br>-----<br>-/-- | 1-7 | TECHNICAL FIELDS SEARCHED (IPC)<br>H04W<br>H04Q |

The present search report has been drawn up for all claims

| Place of search | Date of completion of the search | Examiner |
|---|---|---|
| Munich | 23 March 2009 | Hultsch, Wolfgang |

EPO FORM 1503 03.82 (P04C01)

Europäisches
Patentamt

European
Patent Office

Office européen
des brevets

## EUROPEAN SEARCH REPORT

Application Number

EP 08 25 3178

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIANN-TSONG SHEU ET AL: "Using grey prediction theory to reduce handoff overhead in cellular communication systems" PERSONAL, INDOOR AND MOBILE RADIO COMMUNICATIONS, 2000. PIMRC 2000. TH E 11TH IEEE INTERNATIONAL SYMPOSIUM ON SEPT. 18-21, 2000, PISCATAWAY, NJ, USA,IEEE, vol. 2, 18 September 2000 (2000-09-18), pages 782-786, XP010520742 ISBN: 978-0-7803-6463-9 * the whole document *<br>----- | 1-7 | |
| A | YONG-HOON CHOI ET AL: "Cross-Layer Handover Optimization Using Linear Regression Model" INFORMATION NETWORKING, 2008. ICOIN 2008. INTERNATIONAL CONFERENCE ON, IEEE, PISCATAWAY, NJ, USA, 23 January 2008 (2008-01-23), pages 1-4, XP031238864 ISBN: 978-89-960761-1-7 * the whole document *<br>----- | 1-7 | TECHNICAL FIELDS SEARCHED (IPC) |

The present search report has been drawn up for all claims

| Place of search | Date of completion of the search | Examiner |
|---|---|---|
| Munich | 23 March 2009 | Hultsch, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 3178

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2009

| Patent document cited in search report | Publication date | Patent family member(s) | Publication date |
|---|---|---|---|
| US 2005047370 A1 | 03-03-2005 | CN 1843042 A<br>EP 1658736 A2<br>KR 20060066110 A<br>WO 2005022304 A2 | 04-10-2006<br>24-05-2006<br>15-06-2006<br>10-03-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. Akaike.** A new look at the statistical model identification. *IEEE Transactions on Automatic Control,* 1974, vol. 19 (6), 716-723
- **M. Akar ; U. Mitra.** Variations on Optimal and Suboptimal Handoff Control for Wireless Communication Systems. *IEEE Journal on Selected Areas in Communications,* June 2001, vol. 19, 1173-1185
- **G. Bianchi.** Performance analysis of the IEEE 802.11 distributed coordination function. *IEEE J. Select. Areas Commun.,* 2000, vol. 18 (3), 535-547
- **Y. Iraqi ; R. Boutaba.** Resource management issues in future wireless multimedia networks. *Special issue on the Management of Multimedia Networking,* 2000, vol. 9 (3), 231-260
- **K. Ito.** On stochastic differential equations. *American Mathematical Society,* 1951, vol. 4, 1-51
- **R. H. Jones.** Maximum likelihood fitting of ARMA models to time series with missing observations. *Technometrics,* 1980, vol. 22, 389-395
- **M. Lott ; M. Siebert ; S. Bonjour ; D. von Hugo ; M. Weckerle ; AG. Siemens.** Interworking of WLAN and 3G systems. *IEE Proceedings on Communications,* October 2004, vol. 151, 507-513
- Roaming with Orinoco/IEEE 802.11. *Technical Report,* December 1998
- **J. McNair ; F. Zhu.** Vertical handoffs in fourth-generation multinetwork environments. *IEEE Wireless Communications,* June 2004, vol. 11, 8-15
- **V. Mhatre ; K. Papagiannaki.** Using smart triggers for improved user performance in 802.11 wireless networks. *MobiSys,* 06 June 2006

- **A. Mishra ; M.H. Shin ; W. Albaugh.** An empirical analysis of the IEEE 802.11 Mac layer handoff process. *ACM SIGCOMM Computer Communication Review,* April 2003, vol. 3, 93-102
- **S. Periyalwal ; B. Hashem ; G. Senarath ; K. Au ; R. Matyas.** Future mobile broadband wireless networks: a radio resource management perspective. *Wireless Communications and Mobile Computing,* 2003, vol. 3, 1-13
- **G. P. Pollini.** Trends in Handover Design. *IEEE Communications Magazine,* March 1996
- **M. Stemm ; R. H. Katz.** Vertical handoffs in wireless overlay networks. *Mobile Networks and Applications,* 1998, vol. 3, 335-350
- **G. Schwarz.** Estimating the dimension of a model. *Annal of Statistics,* 1978, vol. 6, 461-464
- **C.C. Tseng ; K. H Chi ; M.D. Hsieh ; H.H Chang.** Location-based Fast Handoff for 802.11 Networks. *IEEE Communications Letters,* April 2005, vol. 9, 304-306
- **H. Velayos ; G. Karlsson.** Techniques to reduce IEEE 802.11 b Mac layer handover time. *Technical Report TRITA-IMIT-LCN R,* 02 April 2003, vol. 03
- **K.D. Wong ; D.C. Cox.** A pattern recognition system for handoff algorithms. *IEEE Journal on Selected Areas in Communications,* July 2000, vol. 18 (7
- **Z. Yang ; X. Wang.** Joint Mobility Tracking and Handoff in Cellular Networks via Sequential Monte Carlo Filtering. *Infocomm 2002,* 2002, vol. 2, 968-975
- **Q. Zhang ; C. Guo ; Z. Guo ; W. Zhu.** Efficient mobility management for vertical handoff between WMAN and WLAN. *IEEE Communications Magazine,* November 2003, vol. 41, 102-108